Europäisches Patentamt

European Patent Office

Office européen des brevets

(19)

(11) Numéro de publication : **0 156 724**
**B1**

(12) **FASCICULE DE BREVET EUROPÉEN**

(45) Date de publication du fascicule du brevet :
15.06.88

(51) Int. Cl.⁴ : **G 06 F   3/06//** G11B5/012

(21) Numéro de dépôt : 85400493.4

(22) Date de dépôt : 14.03.85

(54) Procédé d'enregistrement dans une mémoire à disques et système de mémoire à disques.

(30) Priorité : 16.03.84 FR 8404067

(43) Date de publication de la demande :
02.10.85 Bulletin 85/40

(45) Mention de la délivrance du brevet :
15.06.88 Bulletin 88/24

(84) Etats contractants désignés :
DE GB NL

(56) Documents cités :
GB-A- 2 086 625
US-A- 3 449 718
RESEARCH DISCLOSURE, no. 153, janvier 1977,
pages 6,7, Havant Hampshire, GB; L.N. DAVY et al.:
"Dual movable-head assemblies"
IBM TECHNICAL DISCLOSURE BULLETIN, vol. 26,
no. 8, janvier 1984, pages 4217-4232, New York, US;
R.L. HOFFMAN et al.: "New direct-access storage
device format and attachment"
ELECTRONICS INTERNATIONAL, vol. 54, no. 10, mai
1981, pages 160-163, New York, US; T. SCOOROS:
"Single-board controller interfaces hard disks and
backup media"
PATENTS ABSTRACTS OF JAPAN, vol. 5, no. 138 (P-
78) [810], 2 septembre 1981; & JP - A - 56 74 807
(HITACHI SEISAKUSHO K.K.) 20-06-1981
REVIEW OF ELECTRICAL COMMUNICATION LABO-
RATORIES, vol. 28, no. 5-6, mai-juin 180, pages 361-
367, Tokyo, JP; Y. ITO et al.: "800 Mega byte disk
storage system development"

(73) Titulaire : BULL S.A.
121, Avenue de Malakoff
F-75116 Paris (FR)

(72) Inventeur : Timsit, Claude
11 allée Pacros
F-78124 Mareil (FR)

(74) Mandataire : Fournier, Michel et al
BULL S.A. Industrial Property Department 25 avenue
de la Grande-Armée
F-75016 Paris (FR)

Jouve, 18, rue St-Denis, 75001 Paris, France

## Description

La présente invention concerne les mémoires à disques utilisées principalement pour l'enregistrement de données numériques. Plus particulièrement l'invention concerne un procédé permettant la lecture et l'écriture de données numériques dans une pluralité de disques. Elle concerne également un système de mémoire pour la mise en œuvre du procédé.

Un problème qui se pose actuellement dans les systèmes informatiques est la difficulté d'obtenir un grand débit lors des transferts d'informations vers ou à partir des mémoires de masse faisant partie de ces systèmes. En particulier pour les calculateurs à haute performance, l'élément du système qui limite sa capacité de traitement est en général la mémoire de masse. Le problème à résoudre est alors de concevoir un procédé d'enregistrement et de lecture ainsi qu'un système de mémoire à grande capacité d'informations et autorisant un grand débit vers ou à partir des unités de traitement. L'invention a donc pour objet des moyens permettant de réaliser une telle mémoire à haut débit et de capacité suffisante pour stocker l'énorme quantité d'information nécessaire pour les calculs complexes auxquels est destiné le système informatique. L'invention peut s'appliquer avantageusement à tous les systèmes susceptibles de manipuler de très grandes bases de données, par exemple les systèmes de traitement d'images.

Dans l'état actuel de la technique tel que décrit par exemple dans Electronics International, mai 1981, pages 160-163, seuls les disques magnétiques fournissent des dispositifs ayant un temps d'accès faible pour un coût par bit minimum. Cependant un grand nombre de disques est nécessaire pour atteindre des capacités compatibles avec la puissance de traitement des unités actuelles. Pour améliorer les performances des mémoires de masse à disques, la tendance actuelle est de tenter d'augmenter la densité d'information ainsi que la vitesse de lecture ou d'écriture sur les disques. Par exemple on développe actuellement des procédés d'enregistrement dit perpendiculaires qui augmentent la densité d'information enregistrée, mais ces dispositifs sont encore à l'état de développement et risquent d'être très coûteux. Il en est de même pour les mémoires à disques optiques.

La solution la plus communément adoptée consiste à utiliser un certain nombre d'unités de disques magnétiques conventionnelles sur lequel l'usager répartit ses fichiers de façon astucieuse, chaque fichier étant totalement sur un disque donné. Cependant lorsqu'on utilise des unités de disques conventionnelles les informations qui sont enregistrées sur un disque se présentent toujours comme des mots de plusieurs bits transmis en série. Il en résulte une limitation du débit des informations pouvant transiter entre l'unité de calcul et la mémoire de masse.

Pour résoudre le problème de grand débit et de grande capacité l'invention propose un procédé d'écriture et de lecture selon lequel les bits d'un même mot d'information transitent en parallèle et en synchronisme entre les unités de calcul et les différentes unités de disques. Pour atteindre ce résultat, l'invention concerne également un système de mémoire comprenant des moyens de commande qui permettent de résoudre les problèmes de mise en œuvre du procédé.

Plus particulièrement, l'invention a pour objet un procédé d'écriture et de lecture d'informations numériques dans une mémoire de masse comprenant une pluralité d'unités de disques, chaque unité de disques pouvant contenir un ou plusieurs disques, ladite mémoire de masse étant commandée par au moins un contrôleur de disques, chaque mot d'information numérique étant composé de plusieurs bits et associé à une adresse logique caractérisé en ce que, lors de transferts d'informations vers ou à partir des unités de disques, les bits constituant un mot d'information sont transmis simultanément, chaque bit étant affecté à une unité de disques associée au poids dudit bit dans ledit mot pour y être écrit ou lu en synchronisme avec les autres bits du même mot à une adresse physique fonction univoque de l'adresse logique dudit mot d'information, ladite adresse physique définissant, pour chaque unité de disque, l'emplacement effectif où sera écrit ou lu ledit bit, c'est-à-dire définissant le disque de ladite unité, dans le cas où l'unité contient plus d'un disque, le numéro de piste de ce disque et l'emplacement dudit bit, sur cette piste.

L'invention a également pour objet un système de mémoire comprenant plusieurs unités de disques relié à l'extérieur par un bus de données, un bus de contrôle et/ou un bus d'adresse caractérisé en ce que lesdites unités de disques sont contrôlées par un contrôleur principal coopérant par l'intermédiaire de lignes de données formant un bus, d'un bus d'adresse et/ou de lignes de commande avec une pluralité de contrôleurs de disques qui commandent chacun une unité de disques contenant un ou plusieurs disques et en ce que ledit contrôleur principal comprend des moyens, pour synchroniser un transfert simultané des bits constituant chaque mot d'information à écrire ou à lire dans lesdites unités de disques et des moyens pour commander simultanément en écriture ou en lecture lesdits contrôleurs de disques, chaque contrôleur ainsi validé pouvant traiter pour chaque mot d'information un seul bit dudit mot d'information et transmettre ou recevoir ledit bit par l'intermédiaire d'une ligne de données reliée au contrôleur principal.

D'autres caractéristiques et détails de réalisation apparaîtront dans les modes de réalisation préférentiels décrits dans la description qui va suivre :

La figure 1 montre un système informatique dans lequel peut s'appliquer le procédé et le système de mémoire selon l'invention.

La figure 2 représente un schéma d'ensemble du système de mémoire selon l'invention.

La figure 3 représente la structure interne d'un contrôleur principal selon un mode de réalisation de l'invention.

La figure 4 montre un circuit de détection et de correction d'erreurs faisant parti du contrôleur principal de la figure 3.

Les figures 5 à 8 concernent un circuit sélecteur de lignes de données faisant parti du contrôleur principal de la figure 3.

La figure 9 décrit une unité de disques du système de la figure 2.

La figure 10 représente une matérialisation du système selon l'invention.

Les figures 11a à 11c montrent comment les bits de données sont traités par le procédé selon l'invention.

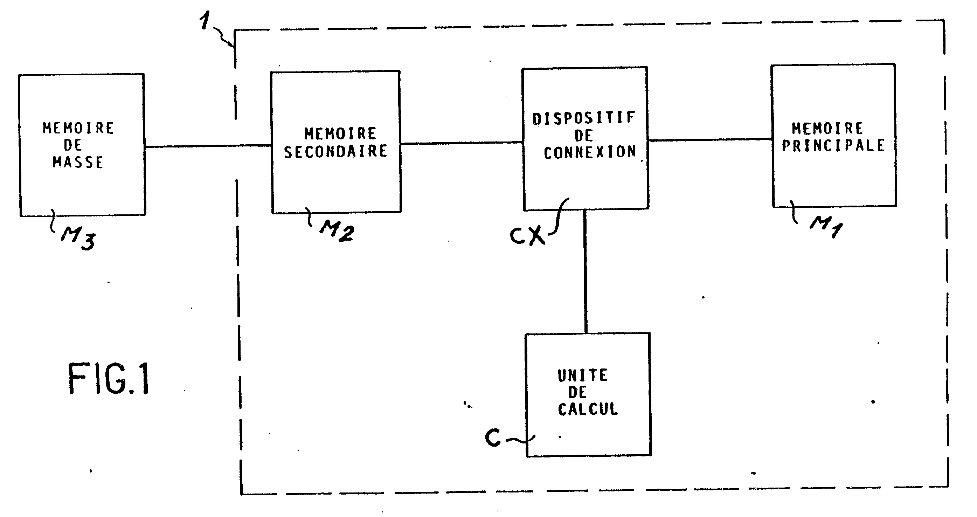

La figure 1 montre un exemple de système informatique afin de mieux situer l'invention dans son contexte. La figure 1 représente de façon très schématique les éléments essentiels d'un système informatique pouvant utiliser le système de mémoire selon l'invention représentée par la mémoire de masse M3. Celle-ci est reliée aux unités de traitement 1 du système informatique par l'intermédiaire d'une mémoire secondaire M2. Cette mémoire secondaire M2 est associée à une unité de commande d'entrée/sortie (non représentée) dont le rôle est de piloter les communications d'informations entre la mémoire de masse M3 et la mémoire principale M1. Les échanges d'informations entre la mémoire de masse M3, la mémoire secondaire M2 et la mémoire principale M1 ainsi que les échanges avec l'unité de calcul C sont réalisés par l'intermédiaire d'un dispositif de connexion Cx. L'unité de calcul C peut être constituée par un système multiprocesseur. Celle-ci est également associée aux différentes unités périphériques classiques non représentées. La mémoire principale M1 contient normalement les programmes et les données des programmes en cours d'exécution et c'est à elle que s'adresse l'unité de calcul C pour obtenir ou ranger les instructions et les données exécutables. La mémoire secondaire M2 sert essentiellement de tampon entre la mémoire de masse M3 et la mémoire principale M1. Cette mémoire secondaire M2 est commandée par une unité d'entrée/sortie qui est conçue pour assurer un débit élevé sur des blocs de données relativement importants. La mémoire de masse M3, objet de la présente invention, a pour rôle de conserver les programmes et les données. Elle doit avoir une taille suffisante pour couvrir les besoins de tous les utilisateurs. Cette taille peut être de l'ordre de 1 gigamot. Afin d'assurer un temps minimum d'appel et de rangement des données et des programmes, il est nécessaire que le débit de la mémoire de masse M3 vers la mémoire secondaire M2 soit très important, de l'ordre de cent mégaoctets par seconde par exemple.

Nous allons maintenant décrire un procédé d'enregistrement et de lecture en relation avec un système de mémoire permettant d'atteindre cet objectif.

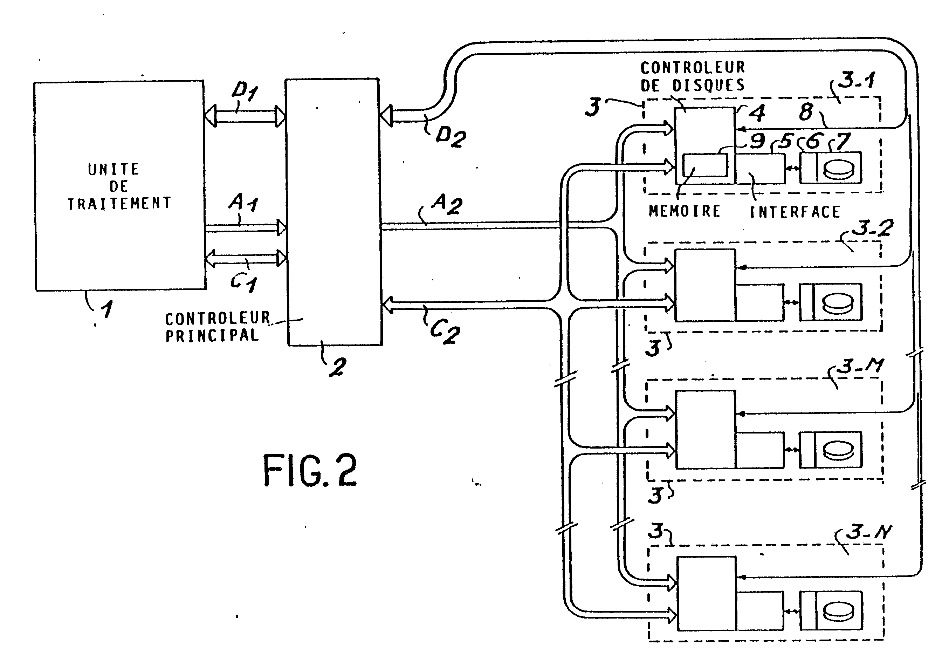

La figure 2 montre avec plus de détails le système de mémoire selon l'invention. L'unité de traitement 1 est du type déjà décrit en relation avec la figure 1. Le système de mémoire M3 comprend essentiellement un contrôleur principal 2 ainsi qu'une pluralité d'unités de disques 3. Le contrôleur principal 2 communique avec l'unité de traitement 1 par l'intermédiaire d'un bus de données D1, d'un bus d'adresses A1 et de lignes de contrôle ou bus de contrôle C1. Le contrôleur principal 2 communique d'autre part avec plusieurs unités de disques 3 par l'intermédiaire des lignes d'un bus de données D2, d'un bus d'adresses A2 et de lignes ou d'un bus de contrôle C2. Comme cela apparaît sur la figure 2 les unités de disques 3 reçoivent toutes la même adresse par l'intermédiaire du bus d'adresse A2. Les lignes de commande et de contrôle appartenant aux bus C2 permettent de transmettre les ordres provenant du contrôleur principal 2 aux différentes unités de disques 3. Inversement ces lignes de contrôle du bus C2 sont également destinées à transmettre les signaux d'état de chacunes des unités de disques 3 vers le contrôleur principal 2. Les signaux de commande provenant du contrôleur principal 2 sont par exemple les ordres d'écriture, de lecture ou de validation. Les signaux de contrôle provenant des unités de disques 3 peuvent fournir des indications sur l'état de fonctionnement des unités de disques 3 correspondantes. Ces signaux seront précisés ultérieurement. Selon une particularité de l'invention, les informations issues de l'unité de traitement 1 et transmises par l'intermédiaire du bus D1 sont des données binaires transmises en parallèle. Le contrôleur principal traite ces données binaires également en parallèle comme nous le verrons ultérieurement. Lors de l'écriture, le contrôleur principal 2 envoie sur le bus D2 des données binaires également en parallèle. Le bus D2 se subdivise ensuite en une pluralité de lignes de données 8 connectées chacune à une unité de disques 3. Inversement lors de la lecture d'informations contenues dans les unités de disques 3, des données binaires issues de chaque unité sont transmises par les lignes de données 8 qui sont regroupées pour former le bus D2 et sont donc transmises en parallèle, vers le contrôleur principal 2. Il est bien évident que l'on ne sortirait pas du cadre de l'invention si les bus d'adresse A1 ou A2 étaient regroupés avec les bus de contrôle C1 ou C2 respectivement pour constituer un bus commun de contrôle et d'adresse.

Les unités de disques 3 comprennent essentiellement un contrôleur de disques 4, une interface 5, une unité d'actionnement 6 et un support d'enregistrement. Le contrôleur de disque 4 est munit également d'une mémoire à accès direct 9. Cette mémoire, pouvant servir d'anté-mémoire, sert à emmagasiner temporairement des informations transitant entre le support d'enregistrement représenté sous forme de disques 7 et le contrôleur principal 2. Le contrôleur de disques 4

comprend une unité de commande programmée qui gère le transfert des informations vers ou à partir des disques 7. Le contrôleur de disques 4 a également pour rôle la génération de bits de correction d'erreurs dites longitudinales. Inversement lors de la lecture à partir du support d'enregistrement 7 le contrôleur de disque 4 utilise ces bits de correction d'erreurs pour corriger éventuellement des erreurs qui se seraient produites au cours de l'enregistrement ou au cours de la lecture. L'unité d'actionnement 6 est commandée par le contrôleur de disques 4 par l'intermédiaire de l'interface 5 qui a également pour rôle la conversion parallèle-série et série-parallèle des données binaires transmises ainsi que le codage et décodage des signaux de données.

Nous pouvons maintenant décrire le procédé d'enregistrement et de lecture exécuté par le système de mémoire selon l'invention.

Lorsque l'unité de traitement 1 désire inscrire des informations sur les disques, celle-ci transmet tout d'abord un signal de commande d'écriture par le bus de contrôle C1 ainsi que les signaux d'adresse sur le bus d'adresse A1. En fonction de ces signaux le contrôleur principal 2 fournit à son tour les signaux d'adressage sur le bus A2 et les signaux de commande sur les lignes de contrôle C2 aux unités de disques 3 faisant partie du système. Ainsi chaque unité de disques reçoit sur une ligne de contrôle appartenant au bus C2 un ordre d'écriture. Chaque unité de disques 3 reçoit également l'information concernant l'adresse logique de disque qui déterminera l'emplacement où sera enregistrée l'information provenant de l'unité de traitement 1. En général, ces informations d'adresse sont indexées lorsque les informations à enregistrer se présentent sous la forme de blocs d'informations c'est-à-dire sous la forme d'une succession de mots de plusieurs bits en parallèles et transmis par le bus de données D1, les uns après les autres. Dans ce cas l'information d'adresse logique de disque à fournir représentera par exemple l'adresse du premier mot du bloc et la longueur du bloc. En résumé l'unité de traitement 1 fournit ce que nous pouvons appeler une adresse logique. Le contrôleur principal 2 génère éventuellement à partir de cette adresse logique, une adresse, dite « adresse logique de disque » susceptible d'être exploitée par chacune des unités de disques 3. En fonction de cette adresse logique de disque, chaque unité de disques 3 est capable de déterminer l'adresse physique où devront être enregistrées les informations prêtes à être transmises. La détermination de l'adresse physique permet à l'unité d'actionnement d'effectuer le positionnement de la tête de lecture sur la piste correspondant à l'adresse physique déterminée par le contrôleur de disque 4 de l'unité 3. Lorsque la tête est positionnée, le contrôleur de disque 4 envoie un signal au contrôleur principal par une ligne du bus C2 indiquant que l'unité est prête à recevoir les données. Lorsque le contrôleur principal 2 a reçu une telle information de chacune des unités de disques 3, le système est prêt pour le transfert des informations. Cet état est signalé également à l'unité de traitement 1 et à partir de ce moment le transfert des informations peut être effectué. Le rôle du contrôleur principal est ensuite de contrôler le transfert d'informations entre l'unité de traitement 1 et les différentes unités de disques 3.

Pour la mise en œuvre de l'invention, il est possible d'utiliser différents types de contrôleurs de disques 4 associés à différents types d'interfaces. La suite du procédé dépendra donc en partie du choix du contrôleur de disques 4. Le contrôleur de disques 4 de l'unité 3, peut comprendre une mémoire 9 d'une capacité égale à un seul secteur. Il est cependant préférable d'utiliser des unités de disques où la mémoire 9 est plus importante. Elle peut avoir la capacité d'une piste complète ou même de plusieurs pistes complètes. Selon le cas, le contrôleur principal 2 ordonnera ou autorisera le transfert des informations provenant de l'unité de traitement 1 par blocs d'informations d'une capacité maximale égale à un secteur ou à une piste complète ou éventuellement à plusieurs pistes complètes.

Lors de la phase d'écriture proprement dite, le contrôleur principal a pour rôle de synchroniser ce transfert en parallèle des bits de chaque mot d'informations appartenant au bloc d'information à enregistrer. Au niveau d'une unité de disques 3, un bloc d'information en cours d'enregistrement apparaît comme une succession de bits en série transmis sur la ligne de données 8. Cette série de bits est enregistrée temporairement dans la mémoire 9 à des adresses correspondant à l'ordre dans lequel apparaissent les bits transmis sur la ligne 8. Lorsque le transfert du bloc d'informations est terminé ou lorsque la capacité maximale de la mémoire est atteinte, chaque contrôleur de disques 4 entame alors la procédure d'enregistrement physique sur le disque des données enregistrées dans la mémoire 9. Ce transfert s'accompagne de la génération de bits de correction d'erreurs longitudinales, d'une conversion parallèle-série et d'un codage. Finalement, des signaux codés sont enregistrés sur une piste ou plusieurs pistes d'un disque 7 de l'unité de disques 3, le numéro de cette piste étant déterminé en fonction de l'adresse physique élaborée par le contrôleur de disques 4 en fonction de l'adresse logique de disque.

Lorsque l'unité de traitement 1 envoie un ordre de lecture d'informations, une procédure inverse est exécutée. L'unité de traitement 1 envoie sur son bus d'adresse A1 les informations d'adresse du bloc d'information à lire ; de même les lignes de commande C1 transmettent les signaux d'ordre de lecture. Le contrôleur principal 2 envoie à son tour l'adresse logique de disque sur le bus d'adresse A2 à chacune des unités de disques 3. Sur le bus de contrôle C2 apparaît un signal d'ordre de lecture qui est transmis à chacune des unités de disques 3.

Dans le cas où la mémoire 9 a une capacité importante, par exemple de plusieurs pistes, celle-ci peut alors jouer le rôle d'anté-mémoire ; cela signifie qu'il est possible que le bloc de données adressé par l'unité de traitement 1 soit déjà inscrit dans la mémoire 9 et dans ce cas, l'unité de disques 3 est déjà prête pour la lecture. Le contrôleur de disques 4 peut être immédiatement exécutée. Si cela n'est pas le cas, le contrôleur de disque 4 envoie des signaux de commande du positionnement de la tête de lecture sur une piste associée à l'adresse-physique correspondant à l'adresse logique reçue par le bus d'adresse A2. Le contrôleur de disques 4 commande ensuite le transfert des informations recherchées et contenues sur la piste ainsi déterminée vers la mémoire 9. Ce transfert s'accompagne alors d'un décodage, d'une conversion série-parallèle et d'une procédure de détection et éventuellement de correction d'erreurs longitudinales. Lorsque l'information recherchée a été complètement enregistrée dans la mémoire 9 chaque contrôleur de disques 4 envoie alors un signal indiquant qu'il est prêt pour le transfert des informations ; dès lors le contrôleur principal 2 signale cet état à l'unité de traitement et le transfert des informations peut être effectué. Le contrôleur principal, grâce à des signaux de commandes transmises sur le bus C2 ordonne la lecture de chacune des mémoires 9 appartenant aux différentes unités de disques 3. Ceci provoque la lecture séquentielle dans chacune des mémoires 9 d'une partie ou de toutes les données contenues dans celles-ci. Ces données binaires apparaissent sur les lignes 8 et sont regroupées pour former des mots de plusieurs bits sur le bus de données D2.

Une telle architecture permet donc d'obtenir un débit important lors des transferts d'informations. On peut par exemple traiter des mots de 64 bits en parallèle et dans ce cas il faut prévoir 64 unités de disques.

Cependant un problème important peut survenir si l'une des unités de disques est défaillante ; c'est pourquoi selon une caractéristique avantageuse de l'invention il est prévu un procédé permettant de surmonter une telle éventualité. Pour cela l'invention prévoit un certain nombre d'unités de disques supplémentaires. De même, dans le contrôleur principal 2 est prévu un générateur de bits de correction d'erreurs dites transversales commandé par l'unité de commande du contrôleur principal 2. A partir des bits d'informations reçus en parallèle sur le bus de données D1, ce générateur de bits de correction d'erreurs peut générer des bits redondants. Ces bits seront ajoutés en parallèle sur le bus de données D2 aux bits issus du bus de données D1. Un certain nombre d'unités de disques seront donc affectés à ces bits de correction d'erreurs. Lors de l'écriture un procédé analogue à celui décrit précédemment est effectué, mais au lieu de transmettre simplement les mêmes bits d'information sur le bus de données D2 que ceux reçus à partir du bus de données D1, des bits supplémentaires seront générés et enregistrés sur les unités de disques supplémentaires. Inversement, lors de la lecture l'ensemble des bits enregistrés sur chacune des unités de disques, y compris les unités supplémentaires, est regroupé sur le bus de données D2. Le contrôleur principal 2 grâce à son unité de correction d'erreurs peut corriger des erreurs qui pourraient s'être produites lors de l'enregistrement ou au cours de la lecture. Dans ce cas, même si une unité de disques est complètement en panne, le contrôleur principal pourra régénérer l'information telle qu'elle avait été transmise lors de l'écriture.

Selon une autre caractéristique avantageuse de l'invention la disposition décrite précédemment permet la mise en œuvre de mesures supplémentaires pour augmenter la fiabilité du système. Ces mesures seront désignées par la suite par « procédé de reconfiguration ». La présence de moyens de correction des informations issues d'une unité de disques défaillante peut être exploitée davantage et selon cette caractéristique de l'invention, on prévoit des unités de disques de réserve qui peuvent être utilisées pour retranscrire des informations perdues à cause d'une unité de disques défaillante. Si par exemple, les moyens de correction et détection d'erreurs comprennent un simple générateur de bits de parité associés à un détecteur de parité, on peut reconstituer pour chaque mot le bit perdu par une unité défaillante. Il faut bien entendu que l'on sache par ailleurs quelle unité est défaillante. Dans ce cas, un simple contrôle de parité permet de reconstituer tous les bits issus de l'unité de disques en panne.

Il existe d'autres dispositifs plus évolués permettant la détection et la correction d'erreurs. Ces dispositifs sont par exemple basés sur l'utilisation des codes de Hamming. Ils permettent de corriger une erreur ou d'en détecter deux simultanées. Avec de tels détecteurs d'erreurs, la génération d'un syndrome d'erreur permet de détecter où est l'erreur et de la corriger si une seule erreur est présente.

Le procédé de reconfiguration sera donc effectué comme suit :

Lors de la lecture, si le détecteur d'erreurs a déterminé qu'une unité est défaillante, cet état est pris en compte par l'unité de commande du contrôleur principal 2 et l'unité de commande 21 ordonne la procédure de reconfiguration. Cette procédure consiste à déclencher une lecture complète de toutes les informations contenues sur tous les disques de toutes les unités. L'ensemble des bits reçus en parallèle sur le bus de données D2, et appartenant aux mêmes mots d'information permet au détecteur d'erreurs de déterminer le disque défaillant et de générer à nouveau le bit correct. Après cette opération le bit corrigé peut être à son tour envoyé vers une unité de disques de réserve. Cette opération est effectuée sur tous les mots enregistrés dans la mémoire de masse. Ainsi, la totalité des informations affectées à l'unité de disques défaillante est reconstituée et enregistrée à nouveau dans l'unité de disques de réserve.

Selon une variante de l'invention, l'unité de disques 3 est munie d'un contrôleur spécialement adapté au système.

La présence d'une mémoire ou anté-mémoire 9 de capacité d'au moins une piste, permet d'accélérer la procédure d'écriture ou de lecture sur le support d'enregistrement. La mémoire 9 étant une mémoire à accès direct, celle-ci peut être lue à n'importe quelle adresse. On peut mettre à profit cette propriété. Lors de l'écriture par exemple, dès que la tête de lecture ou d'écriture est positionnée sur la piste recherchée correspondant à l'adresse logique de disque fournit par le contrôleur principal 2, la tête fournit un signal indiquant le numéro du premier secteur rencontré par cette tête. Cette information peut être prise en compte par le contrôleur de disques 4 qui détermine alors la première adresse de la mémoire 9 correspondant au début de ce premier secteur rencontré. Le contrôleur de disques 4 peut donc immédiatement déclencher la lecture de la mémoire 9 à partir de cette première adresse et poursuivre la lecture selon un ordre cyclique de façon à vider entièrement la mémoire et retranscrire les informations lues selon le même ordre sur le support d'enregistrement. Inversement lors de la lecture, une fois la tête de lecture positionnée, celle-ci peut détecter le premier secteur qu'elle rencontre, en informer le contrôleur de disques. Celui-ci adresse alors la mémoire 9 à partir de l'adresse correspondant au début de ce premier secteur rencontré et déclenche l'ordre d'écriture dans le même ordre cyclique que celui utilisé lors de l'écriture.

Selon une autre variante on peut également prévoir que la mémoire 9 est constituée par deux mémoires à double accès et ayant chacune la capacité d'une ou plusieurs pistes. Cette disposition permet de gagner du temps pendant les transferts d'informations lorsque des opérations de lecture ou d'écriture se succèdent. En effet, une des mémoires correspondant à une piste peut être lue ou écrite sous le contrôle du contrôleur principal 2 alors que l'autre mémoire correspondant à une autre piste peut être lue ou écrite sous le contrôle du contrôleur de disque 4. La lecture ou l'écriture d'un bloc d'information ayant la dimension d'une piste est ainsi effectuée sans attendre que la totalité des opérations portant sur un bloc précédent soient terminées.

Enfin il est également avantageux d'utiliser une unité de disques 3 munie d'un contrôleur 4 dit « intelligent ». En plus des fonctions classiques de contrôle de l'unité de disques, de tels contrôleurs intelligents peuvent effectuer, grâce à un matériel et des microprogrammes adaptés, un procédé d'optimisation des pistes mise en mémoire dans la mémoire 9. Ces contrôleurs peuvent par exemple gérer le contenu d'une mémoire 9 ayant la capacité de six pistes complètes et déterminer quelles sont les pistes qui doivent rester en priorité dans la mémoire 9. Cette gestion du contenu de la mémoire 9 est effectuée selon des critères liés à la fréquence d'utilisation de chacune des pistes en mémoire par le système informatique 1 et au laps de temps qui s'est écoulé depuis la dernière utilisation de chacune de ces pistes. Ces contrôleurs peuvent également effectuer, sans intervention de l'extérieur, une reconfiguration automatique des pistes détectées comme hors d'usage. Dans ce cas, un signal représentatif des capacités de reconfiguration de l'unité de disques est disponible et peut être exploité par le contrôleur principal 2 comme cela sera expliqué ultérieurement.

Cependant, l'invention n'est pas limitée à ces modes particuliers de réalisation. Comme nous le verrons dans la suite, on peut appliquer les enseignements de l'invention en utilisant des unités de disques 3 classiques à condition de prévoir des circuits d'adaptation au niveau de l'interface de ces unités 3.

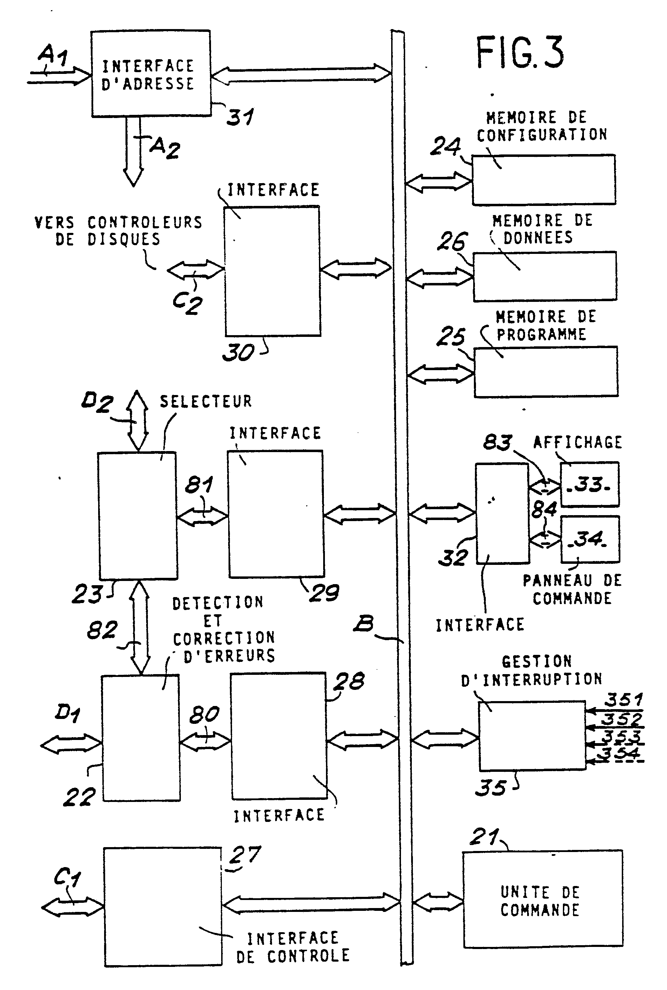

La figure 3 représente de façon plus détaillée la structure interne du contrôleur principal. Le contrôleur principal 2 est constitué par une unité de commande 21, qui peut être un microprocesseur, qui communique avec d'autres éléments du contrôleur par un ensemble de bus B de façon classique. Cet ensemble de bus B est constitué par un bus de donnée, un bus d'adresse, et un bus de contrôle non représentés séparément. Le contrôleur principal comprend une mémoire de programmes 25 reliée au bus B dans laquelle sont enregistrés les programmes permettant d'effectuer les procédés d'écriture, de lecture, et de reconfiguration. Il est prévu également une mémoire de données 26 reliée au bus B servant à emmagasiner les données traitées par l'unité de commande 21. Enfin une autre mémoire dite mémoire de configuration 24 reliée au bus B sert à l'unité de commande 21, notamment pour effectuer une reconfiguration. Le rôle précis de cette mémoire sera explicité ultérieurement. L'unité de commande 21 du contrôleur principal 2 communique avec l'unité de traitement 1 par l'intermédiaire d'unités d'interface : une interface d'adresse 31 et une interface de contrôle 27. L'interface d'adresse 31 est reliée au bus d'adresse A1 ainsi qu'au bus d'adresse A2 qui est relié aux unités de disques 3. Selon le type d'unité de disques 3 utilisé, le rôle de l'interface d'adresse 31 est soit de transmettre directement sur le bus A2 l'adresse logique reçue de l'unité de traitement 1 par le bus d'adresse A1, soit d'adapter cette adresse pour la rendre utilisable pour les unités de disque 3, c'est-à-dire générer une adresse logique de disque en fonction de l'adresse logique reçue sur le bus d'adresse A1. L'interface d'adresse 31 a également un rôle important lors de l'exécution du procédé de reconfiguration. Ce rôle sera détaillé ultérieurement. Le bus B du contrôleur principal 2 communique avec le bus de contrôle C2 connecté aux unités de disques 3, par l'intermédiaire d'une interface 30. Un dispositif d'affichage 33 ainsi qu'un panneau de commande 34 sont prévus pour la maintenance. Ces éléments 33, 34 sont reliés à l'unité de commande 21 via les bus 83 et 84 par l'intermédiaire de l'interface 32. Un sélecteur 23, relié au bus B par l'intermédiaire de l'interface 29 et dont la structure sera précisée ultérieurement, a pour rôle de sélectionner les lignes de données qui seront connectées aux différentes unités de dis-

ques 3. Cet élément 23 est nécessaire pour le fonctionnement du système lorsque l'on veut prévoir la possibilité d'une reconfiguration. En effet, étant donné qu'il existe un nombre d'unités de disques supérieur à celui qui est nécessaire pour enregistrer les bits d'un mot en parallèle, ce sélecteur 23 doit sélectionner les lignes utiles, c'est-à-dire, les lignes qui doivent être reliées effectivement aux unités de disques qui ne sont pas ou qui ne sont plus de réserve.

Un dispositif de détection et de correction d'erreurs 22 est relié à l'unité de commande 21 par l'intermédiaire de l'interface 28 et du bus B. C'est ce dispositif de détection et correction d'erreurs 22 qui a pour rôle, lors de l'écriture, de générer les bits de correction d'erreurs. Ces bits de correction d'erreurs seront ajoutés en parallèle aux bits de données pour chaque mot d'information reçu sur le bus de donnée D1. Inversement lors d'une lecture, ce dispositif 22 peut détecter la position d'une erreur éventuelle et corriger l'erreur. Dans un mode de réalisation particulier, nous verrons comment ce détecteur et correcteur d'erreur 22 permet de détecter et corriger une erreur, ou a la possibilité de détecter deux erreurs simultanées sur un même mot d'information.

Enfin, il est prévu un dispositif de gestion d'interruption 35. Ce dispositif, relié également au bus B, permet de gérer les interruptions occasionnées par des états particuliers détectés ou signalés, provenant soit du détecteur et correcteur d'erreurs 22 soit éventuellement d'autres unités du système signalant la nécessité d'une interruption.

Le fonctionnement de ce contrôleur principal découle du procédé déjà décrit. En résumé lors de l'écriture, les données provenant du bus de données D1 sont traitées par le dispositif de détection et correction d'erreurs 22 où sont générés des bits de correction d'erreurs. L'ensemble de ces bits de données et de correction d'erreurs transitent par le sélecteur 23, présélectionné par des signaux de sélection issus de l'interface 29 et transmis par le bus 81. En fonction de ces signaux, le sélecteur est positionné pour aiguiller les bits de données en parallèle apparaissant sur le bus 82 vers chacune des unités de disques en fonctionnement. Les bits de chaque mot d'information sont, comme cela a déjà été expliqué, répartis sur les différentes unités de disques du système par l'intermédiaire des lignes de données 8. Toutes ces opérations sont bien entendu surveillées et synchronisées par l'unité de commande 21 qui effectue le décomptage des mots d'information transmis.

Lors de la lecture, la procédure inverse est exécutée. Des données en parallèle apparaissant sur le bus de données D2 sont transmises par l'intermédiaire du sélecteur 23 et du bus 82 vers le dispositif de détection et correction d'erreurs 22. Si aucune erreur ne s'est produite ou n'a été détectée par le dispositif 22, les données sont transmises directement sur le bus de données D1. Par contre, si une ou plusieurs erreurs sont détectées, cet état est signalé à l'unité de commande par l'intermédiaire du dispositif de gestion d'interruption 35. Par l'intermédiaire de l'interface 28, l'unité de commande 21 peut reconnaître le type de l'erreur et la position de l'erreur, c'est-à-dire l'unité de disques 3 qui a provoqué l'erreur. Cet état peut déclencher la procédure de reconfiguration qui sera exécutée par l'unité de commande 21 selon une procédure enregistrée dans la mémoire de programme 25. L'exécution de ce programme provoque l'adressage séquentiel, piste par piste, de toutes les pistes de tous les disques de toutes les unités. Il ordonne la lecture séquentielle des pistes, la correction des erreurs et la réinscription de chaque bit corrigé sur une unité de réserve. Cette opération est effectuée sous le contrôle de l'unité de commande 21 qui envoie les signaux de lecture et d'écriture aux différentes unités 3 et provoque la modification de l'adresse fournie au sélecteur 23 par le bus de sélection 81. Plus précisément, l'opération de reconfiguration consiste d'abord à adresser simultanément les unités 3 et donner l'ordre de lecture par l'intermédiaire des mémoires 9 de la première piste de chaque disque, à générer pour chaque mot, grâce au code correcteur le bit manquant et son adresse, à adresser la première piste de l'unité de disques de réserve et donner l'ordre d'écriture, dans la mémoire 9 de cette unité, des bits corrigés. Ensuite le contenu de la mémoire 9 est transféré sur le support d'enregistrement de cette unité. La même opération s'effectue pour la seconde piste et ainsi de suite, piste par piste, jusqu'à épuisement de toutes les pistes des disques de chaque unité.

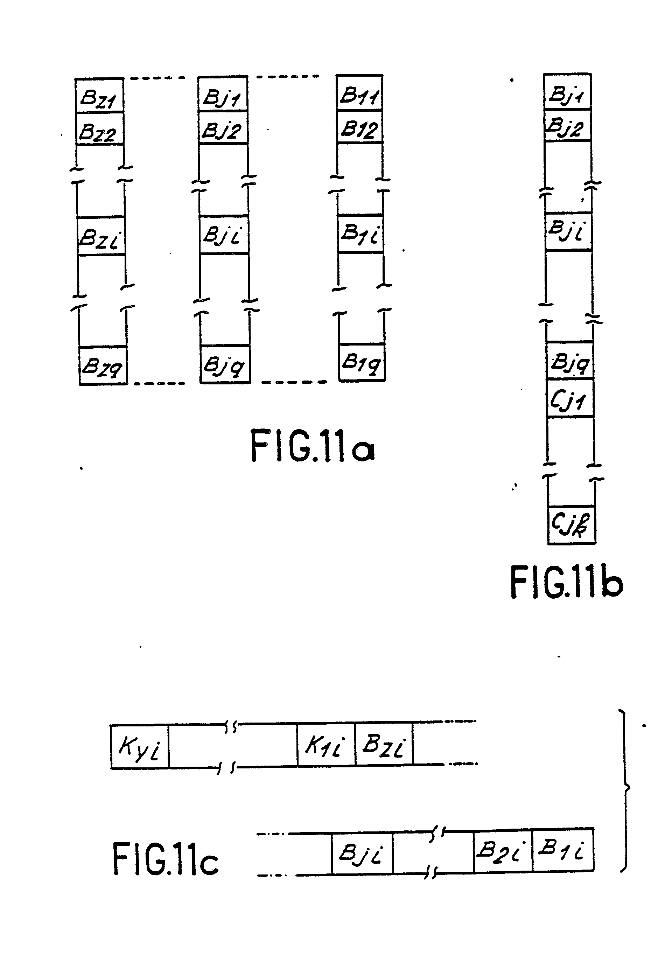

Nous allons maintenant décrire de façon détaillée le procédé d'écriture mis en œuvre par le système de mémoire en relation avec les figures 11a, 11b, et 11c. Lorsque l'unité de traitement 1 désire enregistrer un bloc de données représentées sur la figure 11a, un signal d'écriture est envoyé par le bus de contrôle C1 vers le contrôleur principal 2. Chaque mot de ce bloc d'information apparaît comme un ensemble de bits en parallèle sur le bus de données D1. Chaque ligne du bus de données D1 correspond à un poids déterminé du bit de chaque mot d'information. Par exemple, la ligne i correspond aux bits de poids i : $B_{1i}$, $B_{2i}$, ... $B_{ji}$, ... $B_{zi}$. Lorsqu'un mot d'information apparaît à l'entrée du circuit de détection et correction d'erreurs 22, celui-ci est sous la forme de l'ensemble des bits en parallèle $B_{j1}$, $B_{j2}$, ..., $B_{jl}$... $B_{jq}$. Le circuit de détection et correction d'erreurs génère pour ce mot un ensemble de bits de correction d'erreurs transversales : $C_{jl}$...., $C_{jk}$. L'ensemble de ces bits, bits de correction d'erreurs et bits d'information apparaissent en parallèle à la sortie 82 du circuit de détection et correction d'erreur. La figure 11b représente, le format d'un mot d'information comprenant ces bits de correction d'erreurs. La même opération s'effectue de façon séquentielle pour chaque mot du bloc. Tous les bits d'un même poids, c'est-à-dire associés à une même ligne de donnée du bus de données D2, seront donc dirigés vers une unité de disques associés à

ce poids. La figure 11a représente également les successions de bits transmis par les lignes 8 aux unités de disques 3. L'unité de disques i recevra donc en série les bits Bli..., Bji..., Bzi. Le contrôleur 4 de cette unité de disques 3 va ensuite générer pour chaque série de bits ainsi reçue sur sa ligne de données 8 des bits de correction d'erreurs longitudinales Kli..., Kyi, comme représenté à la figure 11c. C'est finalement l'ensemble de ces bits qui, après codage, sera enregistré sur les supports d'enregistrement.

Inversement, lors de la lecture, chaque disque délivre, après décodage, une série de bits telle que représentée sur la figure 11c. Après correction d'erreurs longitudinales et suppression des bits de correction d'erreurs, ces bits sont regroupés en parallèle pour former des mots de plusieurs bits en parallèle, tels que représentés à la figure 11b, et comprenant des bits d'information et les bits de correction d'erreurs transversales. Le dispositif de détection et correction d'erreurs transversales 22 qui reçoit donc des mots ayant la structure représentée à la figure 11b peut traiter ces bits en vue de détecter la présence d'une erreur et corriger cette erreur. Ainsi, les données éventuellement corrigées seront transmises successivement pour reconstituer le bloc demandé par l'unité de traitement 1.

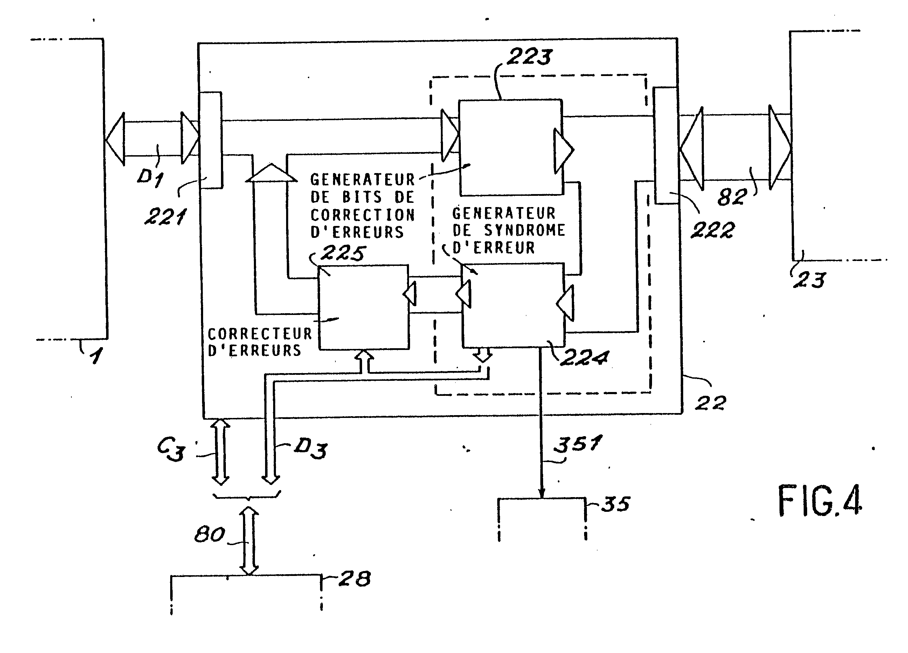

La figure 4 montre en détail les éléments fonctionnels d'un exemple de dispositif de détection et correction d'erreurs transversales 22 basé sur l'utilisation des codes de Hamming. Une mémoire tampon d'entrée 221 sert à stocker temporairement des données reçues de l'unité 1 ou avant d'être transférées vers l'unité 1. De même une mémoire tampon 222 sert à stocker temporairement des données à transmettre vers les unités de disques 3 ou provenant de ces unités.

Lors de l'écriture, les données qui proviennent du bus D1, permettent de générer les bits de correction d'erreurs. Cette opération est effectuée par le générateur 223. A la sortie de ce générateur apparaissent en parallèle les bits d'information et les bits de correction d'erreurs transversales.

Lors de la lecture, les bits de données apparaissant sur le bus 82, stockés temporairement dans la mémoire tampon 222 sont transmis vers un générateur de syndrome d'erreurs 224. Ce générateur indique, dans le cas où il existe une seule erreur, la position de cette erreur, c'est-à-dire le poids correspondant au bit erroné. Dans le cas où il y aurait deux erreurs simultanées sur le même mot cet état est signalé par la ligne 351. Dans le cas d'une seule erreur, la position de l'erreur est indiquée à la sortie du générateur de syndrome d'erreur 224 sur le bus D3. Cette information permet au correcteur d'erreurs 225 de corriger la donnée erronée. Cette information est aussi transmise à l'unité de commande 21 du contrôleur principal 2. Le mode de fonctionnement du dispositif 22 est commandé par les signaux des lignes C3 du bus 80 issu de l'interface 28. Ces signaux sélectionnent le mode écriture ou lecture et permettent de synchroniser le transfert des mots d'un bloc d'informations sous le contrôle de l'unité de commande 21. Les données apparaissant sur le bus D3, lorsqu'il y a une erreur, seront utilisées par l'unité de commande 21 pour effectuer la reconfiguration du système. Les données du bus D3 représentent le poids du bit défaillant et indiquent par la même occasion quelle est l'unité de disques qui a généré cette erreur. L'unité de commande 21 détermine ainsi quelle unité est défaillante et peut déclencher la procédure de reconfiguration pour retranscrire toutes les informations corrigées en provenance de cette unité défaillante vers une unité de disques de réserve. L'unité de disques de réserve qui sera sélectionnée par l'unité de commande 21 est déterminée en fonction des données contenues dans la mémoire de configuration 24. C'est dans cette mémoire qu'est enregistré l'état de chacune des unités de disques y compris les unités de disques de réserve.

Les critères qui permettent de décider à quelle condition il est nécessaire d'effectuer une reconfiguration, peuvent être variables en fonction du degré de fiabilité que l'on exige pour le système. Comme critère de reconfiguration on peut indiquer par exemple la détection d'une erreur longitudinale persistante. Cet état peut être signalé directement par une unité de disques 3 ou par la détection d'erreurs transversales effectuées par le circuit 22. La reconfiguration peut être également envisagée dans le cas où une des unités de disques 3 approche de la saturation du nombre de ces pistes de reconfiguration disponibles, si les unités de disques choisies pour le système sont munies de contrôleurs 4 permettant des reconfigurations de pistes.

Il est bien évident que lorsque le système est en cours de reconfiguration, un signal indiquant cet état est transmis à l'unité de traitement par une des lignes de contrôle C1. Le système de mémoire est ainsi déclaré indisponible.

Egalement lorsqu'une ou plusieurs reconfigurations ont été effectuées, l'état des disques qui ont été reconfigurés doit être indiqué. Ceci peut être simplement réalisé par l'actionnement d'un signal lumineux associé aux unités de disques défaillantes. Dans le cas où une ou plusieurs unités de disques ont été reconfigurées des voyants lumineux correspondants du panneau d'affichage 33 sont allumés et le service de maintenance devra remplacer ces unités. Lorsque le remplacement a été effectué, l'unité de disques pourra être à nouveau utilisée par le système à condition que cette nouvelle situation soit signalée au contrôleur principal par le panneau de commande 34, ce qui provoque une remise à jour de la mémoire de configuration 24.

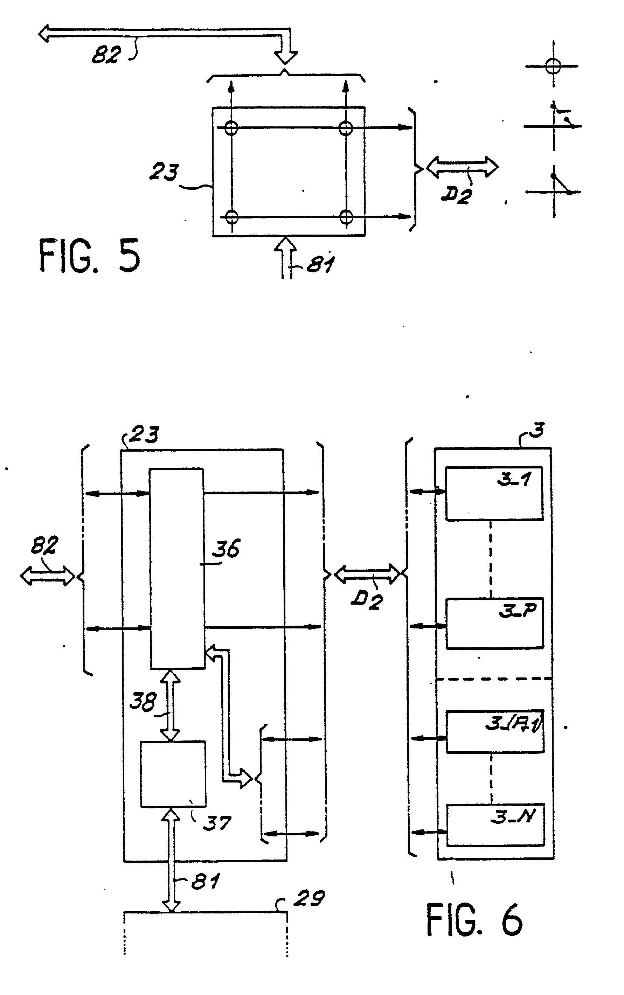

La figure 5 représente un schéma de principe du sélecteur 23 faisant partie du contrôleur principal 2. Ce sélecteur reçoit les données issues du dispositif de détection et de correction d'erreurs transversales 22 par le bus de données 82. Ce sélecteur 23 est adressé par des signaux de sélection déterminés par l'unité de commande et apparaissant sur le bus 81. En fonction de ces signaux, le sélecteur 23 positionne des commutateurs de lignes autorisant le passage des signaux provenant du bus 82 vers des lignes sélectionnées du bus D2.

La figure 6 représente de façon plus détaillée le sélecteur 23 de la figure 5. Le sélecteur 23 comprend essentiellement les circuits de décodage et de commutation 36. Des signaux de sélection et de contrôle apparaissent sur le bus 38 et proviennent de l'interface 37. Cette interface 37 peut être simplement un ensemble de registres servant de mémoire tampon pour les signaux provenant du bus 81. L'interface 37 peut également comprendre un convertisseur série-parallèle dans le cas où les signaux de sélection sont transmis en séries. Un tel cas peut se présenter si l'on désire sélectionner un grand nombre d'unités de disques sans toutefois être obligé de prévoir un grand nombre de lignes pour le bus 81. Nous voyons d'autre part que le circuit de décodage et de commutation 36 est relié aux lignes du bus 82, dont le nombre est égal au nombre de bits transmis en parallèle, y compris les bits de correction d'erreurs, et qui proviennent du circuit de détection et correction d'erreurs transversales 22. A la sortie du circuit 36 sont branchées des lignes de sorties dont le nombre est égal au nombre de lignes du bus 82 auquel s'ajoute un nombre de lignes égal au nombre d'unités de disques de réserve. Ces lignes de sortie du circuit 36 constituent le bus D2. Le bus D2 se subdivise ensuite vers chacune des unités de disques du système. L'ensemble de ces unités de disques 3 comprend d'une part les unités de disques 3 que l'on peut qualifier de « normales » 3-1... 3-P et d'autre part les unités de disques de réserve 3-(P + 1)... 3-N.

Le fonctionnement de ce sélecteur 36 est le suivant : en fonction de l'information de sélection provenant du bus 81 et transmis par l'intermédiaire de l'interface 37 et du bus 38, les commutateurs du sélecteur 36 sont positionnés de sorte que chacune des lignes d'entrées appartenant au bus 82 soit connectée à une et une seule unité de disques 3. L'adressage de ce sélecteur est déterminé par l'unité de commande 21 en fonction de la configuration du système gardée en mémoire dans la mémoire de configuration 24.

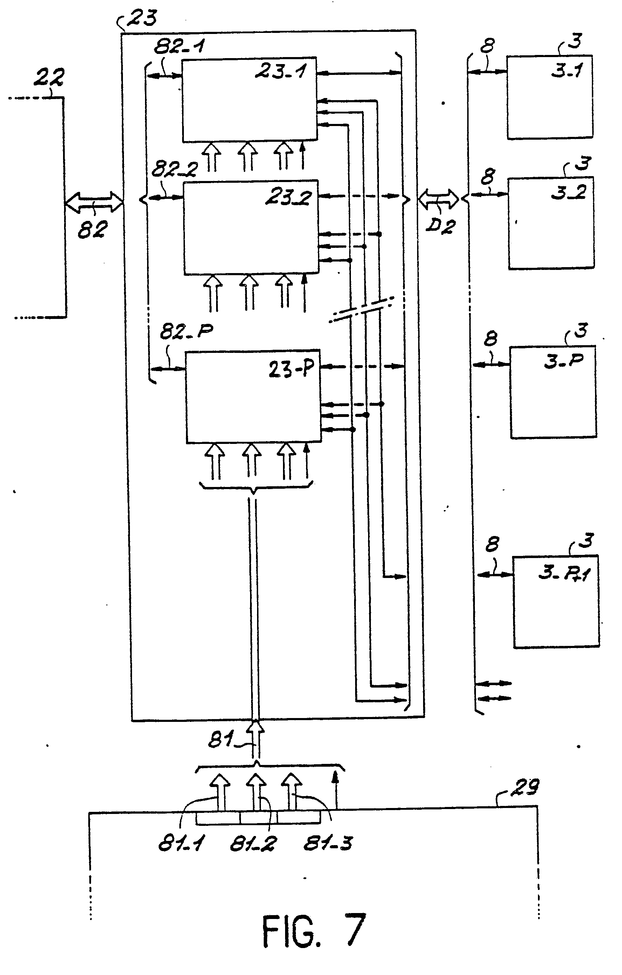

La figure 7 représente un mode de réalisation particulier du sélecteur 23. Dans ce mode de réalisation, les unités de disques de réserve 3-(P + 1)... 3-N sont particularisées. La figure 7 représente un exemple où il n'y aurait que trois unités de disques de réserve. Il est évident que l'homme de métier peut extrapoler cette disposition pour un nombre quelconque d'unités de disques de réserve. Selon ce cas particulier, le bus de sélection 81 est composé de trois bus 81-1, 81-2, 81-3, ainsi que de lignes de contrôle. Ces bus 81-1, 81-2, 81-3 sont affectés respectivement aux unités de disques de réserve. Le sélecteur 23 comprend également une pluralité de modules de sélection 23-1, 23-2, etc 23-P, dont le nombre est égal au nombre de lignes du bus 82. Chaque module de sélection 23-1..., 23-P est connecté d'une part à une unité de disques 3-1..., 3-P associée à ce module de sélection et d'autre part à chacune des unités de disques de réserve 3-(P + 1), 3-(P + 2), 3-(P + 3). La sélection s'effectue de façon analogue à celle des circuits de la figure 5 et de la figure 6 à la différence près que les unités de disques de réserve sont particularisées. Dans ce cas, seules les unités 3-(P + 1), 3-(P + 2), 3-(P + 3) peuvent servir d'unités de disques de reconfiguration. Une telle structure a pour avantage de limiter le nombre de lignes de sélection du bus 81 sans nécessiter une conversion série-parallèle des informations de sélection.

Comme variante à la méthode précédente, on peut ainsi prévoir des modules de sélection munis de registres adressables capables de mémoriser des signaux de sélection issus d'un bus 81 unique. Dans ce cas, les signaux de sélection, sont fournis successivement aux registres des modules de sélection, ce qui permet de réduire le nombre de lignes du bus 81, tout en gardant pour le sélecteur 23 une vitesse de commutation acceptable.

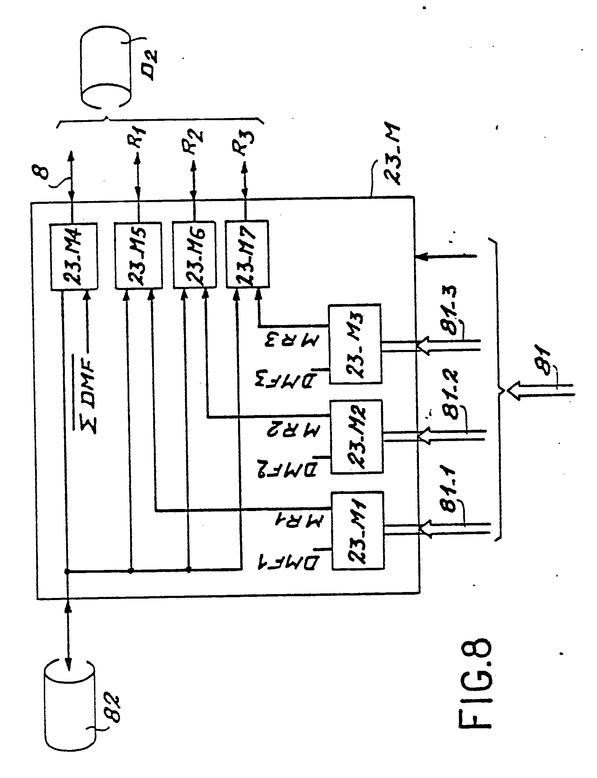

La figure 8 montre un des modules de sélection 23-M associé à l'unité de disques 3-M. Le bus 81-1 est relié à un décodeur 23-M1, le bus 81-2 est relié à un autre décodeur 23-M2 et le bus 81-3 est relié au troisième décodeur 23-M3. En fonction des signaux de sélection reçus sur son entrée, l'un des décodeurs 23-M1, 23-M2, 23-M3, peut fournir à une première sortie un premier signal binaire DMF indiquant que l'unité de disques 3-M est défaillante. Ces signaux DMF1, DMF2, DMF3, issus des décodeurs 23-M1, 23-M2, 23-M3, indiquent pour un état logique déterminé quelle unité 3-M doit être déconnectée. Si l'un quelconque de ces signaux est dans cet état la porte 23-M4 est commandée en ouverture interdisant ainsi le transfert des signaux provenant du bus 82 vers la ligne 8 associée à l'unité de disques 3M. Egalement en fonction des signaux de sélection apparaissant sur les bus 81-1, 81-2, 81-3, les décodeurs associés délivrent à leur seconde sortie un signal MR1, MR2 ou MR3 dont l'état permet de valider l'une des portes 23-M5, 23-M6, 23-M7. Lorsque l'une de ces portes 23-M5, 23-M6, 23-M7 est validée par le décodeur associé, les signaux issus du bus 82 peuvent être transmis vers l'une des unités de réserve correspondante. Ainsi avec un nombre réduit de lignes de sélection, il est possible d'aiguiller des signaux provenant du bus 82 soit vers l'unité de disque normale connectée à la ligne 8 soit vers l'une des unités de disques de réserve connectées aux lignes R1, R2, ou R3. Il faut cependant noter qu'avec de tels modules de sélection les unités de disques normales ne peuvent pas servir d'unité de disques de réserve. Il en résulte que lorqu'un certain nombre d'unités de disques de réserve ont déjà été utilisés lors de la reconfiguration, il est nécessaire que le service de maintenance prenne des mesures pour effectuer une réécriture de ces disques de réserve, sur des unités de disques normales qui auront remplacé des unités défaillantes. Une telle opération peut être effectuée en agissant sur la console de maintenance 34. L'unité de commande 21 pourra

être programmée pour effectuer la lecture systématique des unités de disques de réserve et l'écriture correspondante sur les unités de disques de remplacement.

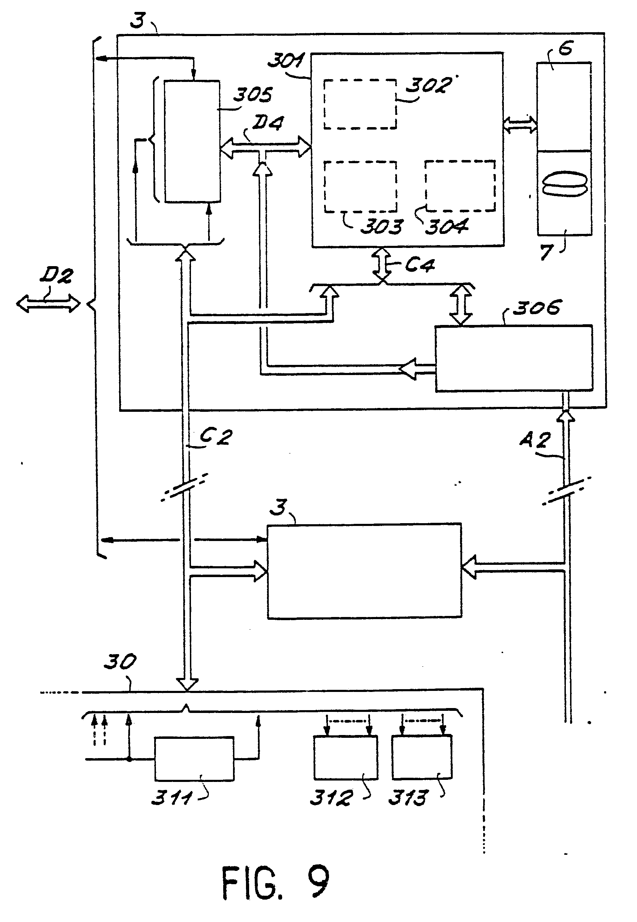

La figure 9 montre comment il est possible de réaliser un système de mémoire selon l'invention en utilisant des unités de disques classiques travaillant sur 8 bits en parallèle. Il convient alors de prévoir un convertisseur série-parallèle servant d'interface entre le contrôleur de disques standard 301 et le contrôleur principal 2. A cet effet, on peut utiliser un registre à décalage bidirectionnel 305 rapide, par exemple TTL, de 8 bits. Les données sont transmises en série par l'intermédiaire d'une ligne du bus D2. Ce registre à décalage 305 est commandé par des lignes de contrôle appartenant au bus de contrôle C2 où sont transmis les signaux de commande provenant de l'interface 30. L'interface 30 contient un diviseur de fréquence par huit 311 dont l'entrée est reliée à une horloge du contrôleur principal 2 et dont la sortie valide le transfert des données contenues dans le registre à décalage 305 vers le contrôleur 301. Lorsque 8 bits ont été enregistrées dans le registre à décalage 305, en synchronisme avec les signaux d'horloge du contrôleur principal, le signal de validation fournit par le diviseur 311 autorise le transfert en parallèle des informations du registre à décalage 305 vers le bus de données D4 du contrôleur de disques 301.

Si les contrôleurs de disques 4 sont prévus pour la réception directe de signaux d'adresse en parallèle, le bus A2 peut être directement connecté au bus d'adresse de ce contrôleur. Par contre un certain nombre de contrôleur de disques classiques reçoivent les signaux d'adresses sur leur bus de données. Un tel contrôleur 301 a été représenté sur la figure 9. Dans ce cas, l'adressage fournit au contrôleur de disques 301 doit être transmis par l'intermédiaire du bus de données D4 de ce contrôleur et il faut donc prévoir une interface 306 qui reçoit les informations d'adresse par le bus A2 et transmet à l'unité de commande du contrôleur de disques d'une part, des signaux d'adressage par l'intermédiaire du bus de données D4 et d'autre part des signaux de contrôle. Ces signaux de contrôle seront reçus sur le bus de contrôle interne de ce contrôleur de disques. Enfin chaque contrôleur de disques fournit sur des lignes de contrôle du bus C4 des informations indiquant son état de fonctionnement. Ces informations sont par exemple, les signaux de synchronisation indiquant que les mots à lire ou à écrire ont été reçus ou sont prêts à être transmis. C'est également par ce bus de contrôle C4 que le contrôleur principal enverra les ordres d'écriture ou de lecture à chaque contrôleur de disques. Ces informations proviennent du bus de contrôle C2 dont certaines lignes sont reliées au bus de contrôle C4 du contrôleur de disques 301. C'est aussi par ces lignes de contrôle C4 et C2 que le contrôleur de disque 301 fournit l'indication que la mémoire 9 est pleine, par exemple lors d'une opération de lecture d'une piste de disques. Chaque contrôleur de disques envoit de tels signaux de contrôle et c'est seulement lorsque tous les signaux de contrôle provenant de chacune des unités de disques indiquent que toutes ces unités de disques sont prêtes que le contrôleur principal 2 pourra déclencher l'ordre de transfert soit en lecture, soit en écriture. Pour cela il faut prévoir dans l'interface 30 des portes logiques 312, 313 dont la sortie indiquera que tous les contrôleurs de disques sont prêts ou que toutes les mémoires 9 sont pleines. La sortie de ces portes servira de signaux de synchronisation pour le contrôleur principal. Inversement lorsque le contrôleur principal veut faire exécuter un ordre d'écriture, il faut que celui-ci transmette à chaque contrôleur de disques, en synchronisme, un signal donnant l'ordre d'écrire dans les mémoires 9 à l'adresse indiquée par les signaux transmis par le bus A2.

La réalisation précise des circuits décrits précédemment dépendra essentiellement du nombre d'unités de disque, que l'on veut commander. Ce nombre d'unités de disques, conditionnera également le choix et le nombre des interfaces utilisables dans le contrôleur principal. Dans le cas par exemple où l'on travaille sur des mots de 64 bits en parallèle, il faut donc prévoir 72 unités de disques au total, plus les unités de disques de réserve. Il est bien évident que l'unité de commande 21 ne pourra pas adresser et contrôler directement l'ensemble de ces unités : c'est le cas en particulier si l'unité de commande 21 est un microprocesseur dont le nombre de bornes est limité. Une façon de résoudre le problème est d'utiliser comme interface des contrôleurs d'entrée/sortie programmables. Le nombre de ces contrôleurs d'entrée/sortie programmables dépendra du nombre de disques que le contrôleur principal doit commander.

Comme exemple de réalisation, nous pouvons indiquer les éléments suivants : pour l'unité de commande 21 on peut utiliser un microprocesseur INTEL 8085 ou équivalent, pour les mémoires de données 26 il est possible d'utiliser une mémoire vive statique INTEL 8155 ou une mémoire vive dynamique INTEL 2164. Comme mémoire de programme 25, on peut utiliser une mémoire morte INTEL 8355 ou une mémoire morte programmable électriquement INTEL 8755. La mémoire de configuration 24 nécessite une capacité relativement réduite, néanmoins il convient que cette mémoire ne soit pas volatile. On peut utiliser une mémoire vive statique alimentée séparément par une batterie. Une autre possibilité consiste à utiliser une mémoire morte modifiable électriquement ayant les caractéristiques par exemple de la mémoire INTEL 2816 A. Pour réaliser les interfaces 27 à 31, il est possible d'utiliser des contrôleurs d'entrée/sortie programmables tel que le modèle INTEL 8255. Comme circuit de gestion des interruptions 35, on peut utiliser un contrôleur d'interruption programmable INTEL 8259. Pour l'interface d'affichage 32 un modèle tel que INTEL 8279 convient parfaitement. Enfin le circuit de détection et de correction d'erreurs, qui a également le rôle de générateur

de bits de correction d'erreurs, peut être réalisé à l'aide du circuit INTEL 8206 ou du circuit NATIONAL SEMI CONDUCTOR DP8400. Enfin le sélecteur 23 peut être réalisé à l'aide de circuits logiques classiques, en particulier les décodeurs 23-M1, 23-M2, 23-M3, peuvent être réalisés simplement à l'aide de portes logiques et d'inverseurs connectés aux entrées bien choisies.

Il convient enfin de remarquer que l'invention ne se limite pas à l'exemple décrit traitant 64 bits en parallèle et utilisant 72 unités de disques. On peut imaginer un dispositif selon l'invention qui ne travaille que sur 8 bits en parallèle. Si l'on veut utiliser un dispositif de détection et de correction d'erreurs du type HAMMING il faudrait dans ce cas prévoir 5 unités de disques affectées aux bits de correction d'erreurs. De plus, une ou plusieurs unités de disques supplémentaires pourront servir d'unité de disques de réserve pour la reconfiguration.

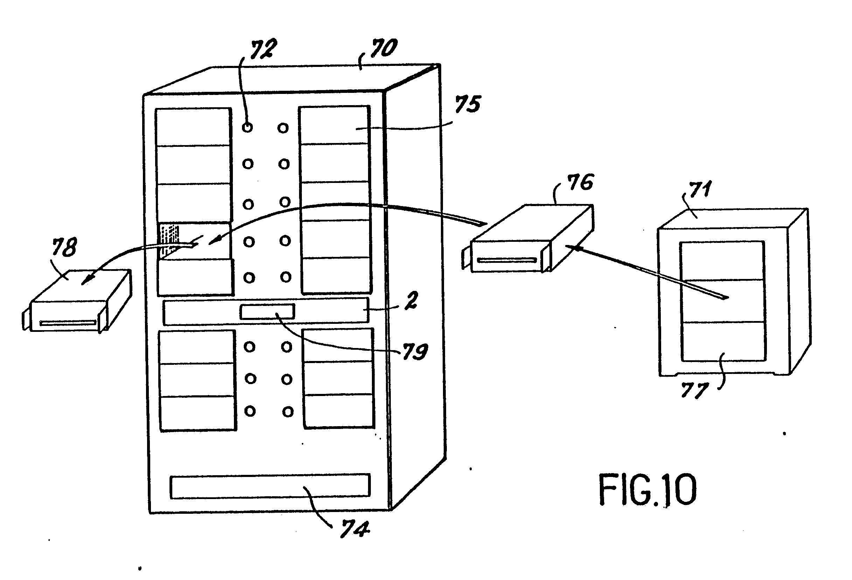

Un exemple de réalisation concret a été décrit à la figure 10. L'ensemble des unités de disques 75 a été disposé dans une armoire 70. Cette armoire contient toutes les unités de disques 75 y compris les unités de disques de réserve servant à la reconfiguration. Pour indiquer au service de maintenance qu'une ou plusieurs unités de disques sont défaillantes des voyants lumineux 72 ont été prévus sur la face de l'armoire. Si par exemple l'unité de disques 78 est déclarée défaillante par le voyant correspondant, le Service de Maintenance peut simplement extraire l'unité défaillante 78 de la remplacer par une unité de secours 76 ou 77 contenue dans une armoire de disques de secours 71. L'armoire 70 contient également le contrôleur principal 2, un panneau de commande et d'affichage 79 et l'alimentation électrique du système 74.

## Revendications

1. Procédé d'écriture et de lecture d'informations numériques dans une mémoire de masse comprenant une pluralité d'unités (3) de disques, chaque unité de disques pouvant contenir un ou plusieurs disques (7), ladite mémoire de masse étant commandée par au moins un contrôleur de disques, chaque mot d'information numérique étant composé de plusieurs bits et associé à une adresse logique caractérisé en ce que, lors de transferts d'informations vers ou à partir des unités (3) de disques, les bits constituant un mot d'information sont transmis simultanément, chaque bit étant affecté à une unité de disques associée au poids dudit bit dans ledit mot pour y être écrit ou lu en synchronisme avec les autres bits du même mot à une adresse physique fonction univoque de l'adresse logique dudit mot d'information, ladite adresse physique définissant, pour chaque unité de disque, l'emplacement effectif où sera écrit ou lu ledit bit, c'est-à-dire définissant le disque de ladite unité, dans le cas où l'unité contient plus d'un disque, le numéro de piste de ce disque et l'emplacement dudit bit sur cette piste.

2. Procédé selon la revendication 1 caractérisé en ce que pour chaque mot d'information à écrire, des bits de détection ou de correction d'erreurs dites transversales sont calculées, associés aux bits dudit mot d'information, chaque bit de détection ou de correction d'erreurs transversales étant transmis en synchronisme avec les bits dudit mot vers une unité de disques associée au poids dudit bit pour y être écrit, et en ce que pour chaque information à lire, une opération de détection ou de correction d'erreurs transversales est effectuée à l'aide desdits bits de détection ou de correction d'erreurs transversales avant que les bits de ladite information soient transmis en synchronisme par le bus de données.

3. Procédé selon la revendication 2 caractérisé en ce que lors de la détection selon des critères prédéterminés, de défauts permanents affectant l'enregistrement dans une ou plusieurs unités de disques, cet état déclenche, si la correction des défauts est possible à l'aide de bits de correction d'erreurs transversales, une procédure de reconfiguration selon laquelle la totalité de l'enregistrement contenu dans la ou les unités de disques défaillantes est retranscrite, après ladite correction d'erreurs transversales, sur une ou plusieurs unités de disques de réserve.

4. Procédé selon l'une des revendications précédentes caractérisé en ce que pour écrire un bloc d'informations, c'est-à-dire une suite de mots d'informations associée à une adresse de bloc et se présentant à chaque unité de disque comme une suite de bits associée à la même adresse de bloc, chaque bit de ladite suite destiné à être enregistré dans l'unité de disques correspondante est d'abord inscrit, à une adresse de mémoire fonction univoque de l'adresse de bloc et de la place du bit dans ladite suite de bits, dans une mémoire à accès direct associée à ladite unité de disques et lorsque ladite suite de bits a été entièrement inscrite dans ladite mémoire, les informations binaires alors contenues dans ladite mémoire sont lues séquentiellement et transmises en série pour être enregistrées sur une piste de l'un des disques de ladite unité, ledit disque et ladite piste dudit disque étant déterminés en fonction de ladite adresse de bloc, l'adresse de mémoire du premier bit transmis étant déterminée en fonction du numéro du premier secteur de ladite piste rencontré par la tête d'enregistrement, la lecture séquentielle de ladite mémoire étant effectuée suivant une séquence cyclique, et en ce que pour lire un mot d'information associé à une adresse logique donnée, les bits constituant cette information sont lus en synchronisme à partir de l'ensemble des mémoires associées auxdites unités de disques à des adresses de mémoires fonction de l'adresse logique immédiatement si l'information est présente dans l'ensemble des mémoires ou, dans le cas contraire, après retranscription dans chaque mémoire de la totalité des informations binaires contenues sur la piste associée à ladite adresse logique, ladite retranscription s'effectuant à partir du premier secteur de ladite piste rencontré par la tête de lecture.

5. Procédé selon la revendication 4 caractérisé en ce que avant d'enregistrer sur une piste de disque la suite d'informations binaires transmise à partir de la mémoire associée à une unité de disques, des bits de détection et de correction d'erreurs ($K_{1i}$ à $K_{2i}$) dites longitudinales sont calculés et ajoutés à ladite suite et en ce que avant d'écrire dans la mémoire les informations binaires provenant d'une piste, une opération de détection et éventuellement de correction d'erreurs longitudinales est effectuée.

6. Procédé selon les revendications 3 ou 5 caractérisé en ce que le résultat desdites opérations de détection d'erreurs transversales et/ou longitudinales sert à établir ledit critère de défauts permanents affectant l'enregistrement dans au moins une unité de disques si, après une ou plusieures relectures des pistes, des erreurs transversales et/ou longitudinales sont encore détectées.

7. Système de mémoire comprenant plusieurs unités (3) de disques relié à l'extérieur par un bus de données (D1), un bus de contrôle (C1) et/ou un bus d'adresse (A1) caractérisé en ce que lesdites unités de disques (3) sont contrôlées par un contrôleur principal (2) coopérant par l'intermédiaire de lignes (8) de données formant un bus (D2), d'un bus d'adresse (A2) et/ou de lignes de commande (C2) avec une pluralité de contrôleurs (4) de disques qui commandent chacun une unité (3) de disques contenant un ou plusieurs disques (7) et en ce que ledit contrôleur principal (2) comprend des moyens (21, 25, 23, 29, 30) pour synchroniser un transfert simultané des bits constituant chaque mot d'information à écrire ou à lire dans lesdites unités (3) de disques et des moyens pour commander simultanément en écriture ou en lecture lesdits contrôleurs (4) de disques, chaque contrôleur (4) ainsi validé pouvant traiter pour chaque mot d'information un seul bit dudit mot d'information et transmettre ou recevoir ledit bit par l'intermédiaire d'une ligne (8) de données reliée au contrôleur principal.

8. Système de mémoire selon la revendication 7 caractérisé en ce que ledit contrôleur principal comprend des moyens (21, 25, 26, 31) pour déterminer, à partir d'une adresse logique associée à un mot d'information à lire ou à écrire, une adresse logique de disque composée d'un numéro logique de disque, d'un numéro logique de piste et d'une adresse complémentaire, ladite adresse logique de disque étant transmise à chaque contrôleur de disque par ledit bus d'adresse et des moyens pour donner l'ordre de lecture ou d'écriture auxdits contrôleurs, via les lignes de commande (C2), et en ce que chaque contrôleur (4) de disques comprend des moyens pour écrire dans l'unité (3) de disques associée, à une adresse physique fonction univoque de l'adresse logique de disque, l'information binaire reçue sur sa ligne (8) de donnée et des moyens pour lire dans ladite unité de disque l'information binaire enregistrée à ladite adresse physique et pour transmettre ladite information binaire sur la ligne de donnée (8).

9. Système de mémoire selon la revendication 7 ou 8 caractérisé en ce que le contrôleur principal comprend des moyens (22) pour calculer pour chaque mot d'information, à partir des bits dudit mot d'information reçus de l'extérieur sur le bus de donnée (D1), des bits de détection ou de correction d'erreurs dites transversales ($C_{jl}$ à $C_{jk}$), destinés à être enregistrés séparément dans des unités (3) de disques affectées à ces bits de détection ou correction d'erreur.

10. Système de mémoire selon l'une des revendications 7 à 9 caractérisé en ce que chaque unité (3) de disques comprend une mémoire vive à accès direct (9, 302) destinée à mémoriser une suite de bits provenant de la ligne (8) de donnée avant d'être transmise vers un disque ou servant à mémoriser une suite de bits provenant d'un disque avant d'être transmise vers la ligne (8) de donnée.

11. Système de mémoire selon les revendications 8 et 10 caractérisé en ce que chaque mémoire (9, 302) associée à une unité (3) de disques est adressable soit par le contrôleur principal (2) soit par le contrôleur (4) de disque de ladite unité, l'adressage par le contrôleur principal (2) étant déterminé par ladite adresse complémentaire.

12. Système de mémoire selon l'une des revendications 7 à 11 caractérisé en ce qu'il comprend des unités (3-(P+1) à 3-N) de disques de réserve et une unité de sélection (23) des lignes de données (D2), dudit contrôleur principal (2), permettant une reconfiguration du système en cas de défaillance d'une ou de plusieurs unités (3) de disques.

13. Système de mémoire selon la revendication précédente caractérisé en ce que ladite unité de sélection (23) est constituée par une pluralité de multiplexeurs (23 - 1 à 23 - P), chacun étant associé à une unité (3-1 à 3-P) de disques normale et relié d'une part à ladite unité (3-1 à 3-P) de disques et d'autre part aux unités (3-(P+) à 3-N) de disques de réserve, sous la commande du contrôleur principal (2).

14. Système de mémoire selon l'une des revendications 7 à 13 caractérisé en ce que chaque contrôleur (4) de disques comprend une unité de traitement (304) travaillant sur des données en parallèle et un convertisseur (305) série-parallèle servant d'interface pour le contrôleur principal (2) et commandé par ce dernier.

**Claims**

1. A method of writing and reading numerical information in a mass memory comprising a plurality of disk units (3), each disk unit being capable of containing one or several disks (7), said mass memory being controlled by at least one disk controller, each word of numerical information comprising a plurality of bits and being associated with a logic address, characterized in that at the time of the transfer of information to or from the disk units (3), the bits making up one word of information are transmitted simultaneously, each bit being allocated to a disk unit associated with the weight of said bit in said word, in order to be written or read synchronously with the other bits of the same word at a physical address which is a univocal function of the logic address of said word of information, said physical address defining, for each disk unit, the effective location where said bit will be written or read, that is, defining the disk of said unit, in the case where the unit includes more than one disk, the number of the track of this disk and the location of said bit on this track.

2. A method according to claim 1, characterised in that for each word of information to be written, transversal error detection or correction bits are calculated, associated with the bits of said word of information, each transversal error detection or correction bit being transmitted synchronously with the bits of said word to a disk unit associated with the weight of said bit in order to be written there, and in that for each information to be read, an operation of detection or correction of transversal errors is effected with the aid of said transversal error detection or correction bits before the bits of said information are transmitted synchronously via the data bus.

3. A method according to claim 2, characterized in that upon the detection, in accordance with predetermined criteria, of permanent defects affecting recording in one or a plurality of disk units, this status triggers a process of reconfiguration, if the correction of the defects is possible with the aid of transversal error correction bits, according to which process the entirety of the recording in the defective disk unit or units is retranscribed, after said correction of transversal errors, onto one or several reserve disk units.

4. A method according to one of the preceding claims, characterized in that for writing a block of information, that is, a sequence of words of information associated with a block address and arriving at each disk unit in the form of a sequence of bits associated with the same block address, each bit of said sequence intended for being recorded in the corresponding disk unit is first inscribed, at an address in memory which is a univocal function of the block address and of the place of the bit in said sequence of bits, into a direct access memory associated with said disk units, and when said sequence of bits has been entirely inscribed into said memory, the binary information then contained in said memory is read in sequence and transmitted in series in order to be recorded on a track of one of the disks of said unit, said disk and said track of said disk being determined as a function of said block address, the memory address of the first bit transmitted being determined as a function of the number of the first sector of said track encountered by the recording head, the sequential reading of said memory being effected in accordance with a cyclical sequence, and in that for reading a word of information associated with a given logic address, the bits comprising this information are synchronously read immediately from the set of memories associated with said disk units at memory addresses which are a function of the logic address, if the information is present in the set of memories or, in the contrary case, after retranscription into each memory of the entirety of the binary information contained on the track associated with said logic address, said retranscription being effected from the first sector of said track encountered by the reading head.

5. A method according to claim 4, characterized in that before recording onto a disk track the sequence of binary information transmitted from the memory associated with a disk unit, longitudinal error detection and correction bits ($K_{1i}$ to $K_{2i}$) are calculated and added to said sequence, and in that before writing into the memory the binary information coming from one track, an operation of detecting and possibly of correcting longitudinal errors is effected.

6. A method according to claims 3 or 5, characterized in that the result of said operations of detecting transversal and/or longitudinal errors serves to establish said criterion for permanent defects affecting recording into at least one disk unit if, after one or more rereadings of the tracks, transversal and/or longitudinal errors are still detected.

7. A memory system including several disk units (3) connected to the exterior via a data bus (D1), a control bus (C1) and/or an address bus (A1), characterized in that said disk units (3) are controlled by a main controller (2) cooperating, via data lines (8) forming a bus (D2), with an address bus (A2), and/or control lines (C2) with a plurality of disk controllers (4) each of which commands one disk unit (3) containing one or several disks (7), and in that said main controller (2) includes means (21, 25, 23, 29, 30) for synchronizing a simultaneous transfer of the bits forming each word of information to be written of read in said disk units (3) and means for commanding said disk controllers (4) to write or read simultaneously, each controller (4) thus validated being able to process, for each word of information, a single bit of said word of information and to transmit or receive said bit via a data line (8) connected to the main controller.

8. A memory system according to claim 7, characterized in that said main controller includes means (21, 25, 26, 31) for determining from a logic address associated with a word of information to be read or written, a logic disk address comprising a logic disk number, a logic track number and a complementary address, said logic disk address being transmitted to each disk controller via said address bus, and means for giving the order to read or write to said controllers via the control lines (C2), and in that each disk controller (4) includes means for writing the binary information received over its data line (8) into the associated disk unit (3), at a physical address which is a univocal function of the logic disk address and means for reading in this disk unit the binary information recorded at said physical address and for transmitting said binary information over the date line (8).

9. A memory system according to claim 7 or 8, characterized in that the main controller includes means (22) for calculating for each word of information from the bits of said word of information received from the exterior over the data bus (D1) bits for detecting or correcting transversal errors ($C_{jl}$ to $C_{jk}$), intended to be recorded separately into disk units (3) allocated to these error detection or correction bits.

10. A memory system according to one of the claims 7 to 9, characterized in that each disk unit (3) includes a read-write direct acces memory (9, 302) intended for memorizing a sequence of bits coming from the data line (8) before being transmitted to a disk, or serving to memorize a sequence of bits coming from a disk before being transmitted to the data line (8).

11. A memory system according to claims 8 and 10, characterized in that each memory (9, 302) associated with a disk unit (2) is addressable either by the main controller (2) or by the disk controller (4) of said unit, the addressing via the main controller (3) being determined by said complementary address.

12. A memory system according to one of the claims 7 to 11, characterized in that it includes reserve disk units (3-(P + 1) to 3-N) and a unit (23) for selecting the data lines (D2) of said main controller (2), enabling a reconfiguration of the system in the event of a breakdown of one or more disk units (3).

13. A memory system according to the preceding claim, characterized in that said selection unit (23) comprises a plurality of multiplexers (23-1 to 23-P), each being associated with one normal disk unit (3-1 to 3-P) and connected on one hand, to said disk unit (3-1 to 3-P), and, on the other hand, to the reserve disk units (3-(P + 1) to 3-N), under the control of the main controller (2).

14. A memory system according to one of the claims 7 to 13, characterized in that each disk controller (4) includes a processing unit (304) operating with data in parallel and a series/parallel converter (305) serving as an interface for the main controller (2) and controller by the latter.

## Patentansprüche

1. Verfahren zum Schreiben und Lesen von digitalen Informationen in einem Massenspeicher, mit einer Mehrzahl von Platteneinheiten (3), wobei jede Platteneinheit eine oder mehrere Platten (7) enthalten kann, wobei ferner der Massenspeicher durch wenigstens eine Plattensteuerung gesteuert wird, jedes digitale Informationswort zusammengesetzt ist aus mehreren Bits und einer logischen Adresse zugeordnet ist, dadurch gekennzeichnet, daß bei Informationsüberführungen zu oder von den Platteneinheiten (3) die ein Informationswort bildenden Bits gleichzeitig übertragen werden, wobei jedes Bit einer Platteneinheit zugewiesen wird, welche der Wertigkeit dieses Bits in dem Wort zugeordnet ist, um darin synchron mit den anderen Bits desselben Wortes an einer eindeutigen physikalischen Adresse der Logikadresse des genannten Informationswortes eingeschrieben oder ausgelesen zu werden, wobei die genannte physikalische Adresse für jede Platteneinheit die effektive Stelle angibt, an welcher das genannte Bit eingeschrieben oder ausgelesen wird, d.h. im Falle, daß die Einheit mehr als eine Platte enthält, die Platte dieser Einheit, die Spurnummer dieser Platte und die Stelle des Bits in dieser Spur angibt.

2. Verfahren nach Anspruch 1, dadurch gekennzeichnet, daß für jedes einzuschreibende Informationswort Detektions- oder Korrekturbits für sogenannte transversale Fehler berechnet werden, welche den Bits des genannten Informationswortes zugeordnet sind, wobei jedes Detektions- oder Korrekturbit für transversale Fehler synchron mit den Bits dieses Wortes zu einer Platteneinheit übertragen wird, welche der Wertigkeit dieses Bits zugeordnet ist, um dort eingeschrieben zu werden, und daß für jede auszulesende Information eine Operation zur Detektion oder Korrektur von transversalen Fehlern mittels der genannten Detektions- oder Korrekturbits für transversale Fehler durchgeführt wird, bevor die Bits der genannten Information synchron über den Datenbus übertragen werden.

3. Verfahren nach Anspruch 2, dadurch gekennzeichnet, daß bei der nach vorbestimmten Kriterien erfolgenden Erfassung von permanenten Fehlern, welche die Aufzeichnung in einer oder mehreren Platteneinheiten beeinträchtigen, dieser Zustand, wenn die Korrektur der Fehler mittels Bits zur Korrektur von transversalen Fehlern möglich ist, eine Rekonfigurationsprozedur auslöst, wonach die Gesamtheit der Aufzeichnung, die in der oder den fehlerhaften Platteneinheiten enthalten ist, nach der genannten Korrektur der transversalen Fehler auf eine oder mehrere Reserve-Platteneinheiten überschrieben wird.

4. Verfahren nach einem der vorstehenden Ansprüche, dadurch gekennzeichnet, daß zum Schreiben eines Blocks von Informationen, d. h. einer Folge von Informationswörtern, die einer Blockadresse zugeordnet ist und sich jeder Platteneinheit als Folge von Bits anbietet, welche derselben Blockadresse zugeordnet sind, jedes Bit der genannten Folge, das dazu bestimmt ist, in der entsprechenden Platteneinheit aufgezeichnet zu werden, zunächst an einer Speicheradresse, die eine eindeutige Funktion der Blockadresse und der Stelle des Bits in der genannten Bitfolge ist, in einem Speicher mit Direktzugriff eingeschrieben wird, welche der genannten Platteneinheit zugeordnet ist, und wenn die genannte Bitfolge vollständig in den genannten Speicher eingeschrieben ist, werden die dann in diesem Speicher enthaltenen Binärinformationen sequentiell ausgelesen und seriell übertragen, um auf einer Spur einer der Platten der genannten Einheit aufgezeichnet zu werden, wobei diese Platte und die genannte Spur dieser Platte in Abhängigkeit von der Blockadresse bestimmt werden und wobei die Speicheradresse des ersten übertragenen Bits in Abhängigkeit von der Nummer des ersten Sektors der genannten Spur bestimmt wird, auf welche der Aufzeichnungskopf trifft, wobei weiterhin das sequentielle Auslesen des genannten Speichers gemäß einer zyklischen Folge abläuft, und daß zum Auslesen eines Informationswortes, das einer gegebenen Logikadresse zugeordnet ist, die diese Information bildenden Bits synchron aus der Gesamtheit von diesen Platteneinheiten zugeordneten Speichern an von der Logikadresse abhängigen Speicheradressen unmittelbar ausgelesen werden, wenn die Information in der Gesamtheit von Speichern enthalten ist, oder im entgegengesetzten Fall nach Überschreibung der Gesamtheit von Binärinformationen, die in der der genannten Logikadresse zugeordneten Spur enthalten sind, in jeden Speicher, wobei diese Überschreibung mit dem ersten Sektor dieser Spur, auf welchen der Lesekopf trifft, beginnt.

5. Verfahren nach Anspruch 4, dadurch gekennzeichnet, daß vor der Aufzeichnung der binären Informationsfolge, die aus dem einer Platteneinheit zugeordneten Speicher übertragen wurde, auf eine Spur der Platte Fehlerdetektions und -korrekturbits ($K_{1i}$ bis $K_{2i}$) für sogenannte longitudinale Fehler berechnet und der genannten Folge hinzugefügt werden und daß vor dem Einschreiben der von einer Spur herrührenden Binärinformationen in den Speicher eine Detektionsoperation und gegebenenfalls eine Korrekturoperation für longitudinale Fehler durchgeführt wird.

6. Verfahren nach den Ansprüchen 3 oder 5, dadurch gekennzeichnet, daß das Ergebnis der genannten Fehlerdetektionsoperationen für transversale und/oder longitudinale Fehler dazu dient, das genannte Kriterium für permanente Fehler zu erstellen, welche die Aufzeichnung in wenigstens einer Platteneinheit beeinträchtigen, wenn nach einmaligem oder mehrfachem Wiederauslesen der Spuren weiterhin transversale und-/oder longitudinale Fehler festgestellt werden.

7. Speichersystem mit mehreren Platteneinheiten (3), welches nach außen durch einen Datenbus (D1), einen Steuerbus (C1) und/oder einen Adresbus (A1) angeschlossen ist, dadurch gekennzeichnet, daß die genannten Platteneinheiten (3) durch eine Hauptsteuerung (2) gesteuert werden, welche über Datenleitungen (8), die einen Datenbus (D2) bilden, über einen Adreßbus (A2) und/oder Steuerleitungen (C2) mit mehreren Plattensteuerungen (4) zusammenwirken, welche jeweils eine Platteneinheit (3) steuern, die eine oder mehrere Platten enthalten ; und daß die genannte Hauptsteuerung (2) Mittel (21, 25, 23, 29, 30) enthält, um eine gleichzeitige Überführung der Bits zu synchronisieren, welche jedes Informationswort bilden, das in den Platteneinheiten (3) ausgelesen oder eingeschrieben werden soll, und Mittel enthält, um gleichzeitig die genannten Plattensteuerungen (4) beim Einschreiben oder Auslesen zu steuern, wobei jede so freigegebene Steuerung (4) für jedes Informationswort ein einziges Bit des genannten Informationswortes verarbeiten kann und das genannte Bit über eine an die Hauptsteuerung angeschlossene Datenleitung (8) übertragen oder empfangen kann.

8. Speichersystem nach Anspruch 7, dadurch gekennzeichnet, daß die genannte Hauptsteuerung Mittel (21, 25, 26, 31) enthält, um aus einer Logikadresse, welche einem auszulesenden oder einzuschreibenden Informationswort entspricht, eine Platten-Logikadresse zu bestimmen, welche aus einer Platten-Logiknummer, einer Spur-Logiknummer und einer Platten-Logiknummer, einer Spur-Logiknummer und einer komplementären Adresse zusammengesetzt ist, wobei die genannte Platten-Logikadresse jeder Plattensteuerung über den Adreßbus und über Mittel zugeführt wird, um den Lese- oder Schreibbefehl an die genannten Steuerungen über Steuerleitungen (C2) abzugeben und daß jede Plattensteuerung (4) Mittel enthält, um in die zugeordnete Platteneinheit (3) an einer physikalischen Adresse, welche eine eindeutige Funktion der Platten-Logikadresse ist, die Binärinformation einzuschreiben, welche sie über ihre Datenleitung (8) empfangen hat und Mittel enthält, um aus der genannten Platteneinheit die Binärinformation auszulesen, welche an der genannten physikalischen Adresse aufgezeichnet wurde, und um die genannte Binärinformation auf die Datenleitung (8) zu überführen.

9. Speichersystem nach Anspruch 7 oder 8, dadurch gekennzeichnet, daß die Hauptsteuerung Mittel (22) enthält, um für jedes Informationswort aus den von außen über den Datenbus (D1) empfangenen Bits des genannten Informationswortes Fehlerdetektions- oder Korrekturbits für sogenannte transversale Fehler ($C_{jl}$ bis $C_{jk}$) zu erzeugen, welche dazu bestimmt sind, getrennt in den Platteneinheiten (3) aufgezeichnet zu werden, die diesen Fehlerdetektions- oder Korrekturbits zugeordnet sind.

10. Speichersystem nach einem der Ansprüche 7 bis 9, dadurch gekennzeichnet, daß jede Platteneinheit (3) einen Arbeitsspeicher mit direktem Zugriff (9, 302) enthält, der dazu bestimmt ist, eine Folge von Bits zu speichern, welche von der Datenleitung (8) herrühren, bevor sie zu einer Platte übertragen werden, oder dazu dienen, eine Folge von Bits zu speichern, welche von einer Platte herrühren, bevor sie zu der Datenleitung (8) übertragen werden.

11. Speichersystem nach den Ansprüchen 8 und 10, dadurch gekennzeichnet, daß jeder einer Platteneinheit zugeordnete Speicher (9, 302) entweder durch die Hauptsteuerung (2) oder durch die Plattensteuerung (4) der genannten Einheit adressierbar ist, wobei die Adressierung durch die Hauptsteuerung (2) durch die genannte komplementäre Adresse bestimmt wird.

12. Speichersystem nach einem der Ansprüche 7 bis 11, dadurch gekennzeichnet, daß es Reserve-Platteneinheiten (3-(P+1) bis 3-N) und eine Selektionseinheit (23) zum Auswählen der Datenleitungen (D2) der genannten Hauptsteuerung (2) enthält, um eine Rekonfiguration des Systems im Falle eines Versagens einer oder mehrerer Platteneinheiten (3) zu ermöglichen.

13. Speichersystem nach dem vorhergehenden Anspruch, dadurch gekennzeichnet, daß die genannte Selektionseinheit (23) durch mehrere Multiplexer (23 - 1 bis 23 - P) gebildet ist, die jeweils einer normalen Platteneinheit (3-1 bis 3-P) zugeordnet sind und einerseits verbunden sind mit der genannten Platteneinheit (3-1 bis 3-P) und andererseits mit den Reserve-Platteneinheiten (3-(P+1) bis 3-N), gesteuert durch die Hauptsteuerung (2).

14. Speichersystem nach einem der Ansprüche 7 bis 13, dadurch gekennzeichnet, daß jede Plattensteuerung (4) eine Verarbeitungseinheit (304) enthält, die Daten parallel verarbeitet, und eine Seriell/Parallel-Umsetzer (305) enthält, der als Schnittstelle für die Hauptsteuerung (2) dient und durch diese gesteuert wird.

FIG.1

0 156 724

UNITE DE TRAITEMENT

CONTROLEUR PRINCIPAL

CONTROLEUR DE DISQUES

MEMOIRE INTERFACE

FIG.2

FIG.3

A1

INTERFACE D'ADRESSE

31

A2

VERS CONTROLEURS DE DISQUES

INTERFACE

C2

30

MEMOIRE DE CONFIGURATION

24

MEMOIRE DE DONNEES

26

MEMOIRE DE PROGRAMME

25

D2

SELECTEUR

INTERFACE

81

23

82

DETECTION ET CORRECTION D'ERREURS

29

83 AFFICHAGE

.33.

84

.34.

32

PANNEAU DE COMMANDE

INTERFACE

B

28

D1

80

22

INTERFACE

GESTION D'INTERRUPTION

351
352
353
354

35

C1

27

INTERFACE DE CONTROLE

21

UNITE DE COMMANDE

3

FIG.4

GENERATEUR DE BITS DE CORRECTION D'ERREURS

GENERATEUR DE SYNDROME D'ERREUR

CORRECTEUR D'ERREURS

0 156 724

FIG. 5

FIG. 6

82

23

D2

81

23

82

36

38

37

81

29

3

3_1

3_P

3_R1

3_N

D2

FIG. 7

FIG.8

FIG. 9

FIG.10

0 156 724

FIG.11a

FIG.11b

FIG.11c